# EUROPEAN PATENT SPECIFICATION

(11) **EP 3 764 633 B1**
(45) Date of publication and mention of the grant of the patent: **24.05.2023**
(21) Application number: 19211308.2
(22) Date of filing: 25.11.2019
(51) Int. Cl.: H04N 23/63, H04N 23/60

(54) **PHOTOGRAPHING METHOD, DEVICE, STORAGE MEDIUM, AND COMPUTER PROGRAM**
FOTOGRAFIERVERFAHREN, VORRICHTUNG, SPEICHERMEDIUM UND COMPUTERPROGRAMM
MÉTHODE DE PHOTOGRAPHIE, APPAREIL, SUPPORT DE STOCKAGE ET PROGRAMME INFORMATIQUE

(30) Priority: 12.07.2019 CN 201910628473
(43) Date of publication of application: 13.01.2021
(73) Proprietor: Beijing Xiaomi Mobile Software Co., Ltd., Beijing 100085 (CN)
(72) Inventor: JIN, Tao, Beijing, 100085 (CN)
(74) Representative: Gevers Patents

(56) References cited:
- WO-A1-2018/000299
- US-A1- 2005 024 517
- US-A1- 2017 187 988

## Description

### TECHNICAL FIELD

The subject disclosure relates to photography and video recording, and in particular to a photographing method and device, a storage medium, and a computer program.

### BACKGROUND

US 2005/024517 discloses using a digital camera, recording a first image of at least one subject, generating a guide image from the first image, and using the guide image to record a second image of a second subject. The guide image is superimposed over a subject of the second image in preparation for recording the second image so that the second image will be recorded with at least one of substantially the same composition and substantially the same perspective as the first image.

WO 2018/000299 discloses assisting acquisition of a picture, to display a preview of a scene visible from camera, obtaining reference data associated to a target picture depicting at least one reference object, said reference data comprising at least location data and an outline of said reference object; when a location of the device matches said location data associated with the target picture, providing the outline as an overlay to said preview to allow reproducing said target picture.

US 2017/187988 discloses image processing, analogizing a composition part of an object at a low price but high performance by using the guide display unit. The user terminal includes an imaging module that takes an image of an object, a guide display module that displays a guide to image a composition part composing the object, and an analogy module that analogizes the composition part. Screen sharing between the user terminal and the adviser terminal enables the makeup adviser to offer the user an advice in real time.

An image or a picture of a same scene may have to be photographed again such as when video recording is accidentally interrupted, and resumed, with an expectation that content of the image or picture photographed at the time is to be as similar as possible to that of an image or a picture photographed at a previous time. In this case, an accurate location of a photographed subject in a previous shot may have to be found. As another example, in memory of an important experience, one may go to one place same time every year expecting to take a picture of a same background at a same angle as of a picture taken in a previous year. The photographer may rely on but his or her memory, or a picture or photo taken previously, as a simple reference. A resulting photo may often differ a lot from what is expected, failing to satisfy the user.

### SUMMARY

Embodiments herein provide a photographing method and device, a storage medium, and a computer program, in accordance with claims which follow.

The features of the method and device according to the subject disclosure are defined in the independent claims, and the preferable features according to the subject invention are defined in the dependent claims.

Other features and advantages of embodiments herein may become clear with elaboration made below, or may be learned partially by practicing embodiments herein.

According to an aspect of embodiments herein, a photographing method includes:
receiving an instruction to perform photography alignment;
displaying a user interface for selecting a reference picture, the reference picture including a photo or an image of a video;
marking a contour of a target to align with in the reference picture, the target including at least an object; and
displaying the reference picture with the contour of the target marked in a screen.

With at least one embodiment herein, a reference picture is selected from photographing equipment. A contour of a target to align with in the reference picture is marked. The reference picture with the contour of the target marked is displayed in a viewfinder screen. In photographing, a photographer may locate a photographed subject in an image accurately according to a line of a contour in a viewfinder screen, restoring a scene in the reference picture to the best extent, enriching experience in photographing, improving effect of photographing.

The reference picture may include a picture taken in advance.

The reference picture may include a picture received from other equipment.

The reference picture may include a picture downloaded by a browser or an application (APP).

The marking a contour of a target to align with in the reference picture may include:
displaying the contour of the target to align with using a line, and displaying a part of the reference picture other than the line of the contour with transparency ranging from 0% to 100%.

The contour of the target to align with may include at least one of an external contour or an internal contour.

The target may include a primary target and a secondary target. The displaying the contour of the target to align with using a line may include:
displaying a contour of the primary target to align with using at least one of a first color or a line of a first type; and
displaying a contour of the secondary target to align with using at least one of a second color or a line of a second type.

The photographing method may further include: after the displaying the reference picture with the contour of the target marked in a screen, receiving an image captured by a front-facing camera.

The photographing method may be implemented by a mobile phone.

According to an aspect of embodiments herein, a photographing device includes a receiving module, a selecting module, a marking module, and a displaying module.

The receiving module is adapted to receiving an instruction to perform photography alignment.

The selecting module is adapted to displaying a user interface for selecting a reference picture. The reference picture includes a photo or an image of a video.

The marking module is adapted to marking a contour of a target to align with in the reference picture. The target includes at least an object.

The displaying module is adapted to displaying the reference picture with the contour of the target marked in a screen.

The advantages and technical effects of the device herein correspond to those of the method presented above.

The reference picture may include a picture taken in advance.

The reference picture may include a picture received from other equipment.

The reference picture may include a picture downloaded by a browser or an application (APP).

The marking module is adapted to marking the contour of the target to align with in the reference picture by: displaying the contour of the target to align with using a line, and displaying a part of the reference picture other than the line of the contour with transparency ranging from 0% to 100%.

The contour of the target to align with may include at least one of an external contour or an internal contour.

The target may include a primary target and a secondary target. The contour of the target to align with may be displayed using the line by:
displaying a contour of the primary target to align with using at least one of a first color or a line of a first type; and
displaying a contour of the secondary target to align with using at least one of a second color or a line of a second type.

The photographing device may further include a receiving module. The receiving module may be adapted to receiving an image captured by a front-facing camera after the reference picture with the contour of the target marked has been displayed in a screen.

The photographing device may be implemented on or as a mobile phone.

According to an aspect of embodiments herein, a photographing device includes a processor and memory.

The memory stores an instruction executable by the processor.

The processor is adapted to implementing at least part of an aforementioned method for controlling a window.

According to an aspect of embodiments herein, a transitory or non-transitory computer-readable storage medium / information medium has stored thereon instructions of a computer program that, when executed by a processor of mobile User Equipment (UE), cause the mobile UE to implement at least part of an aforementioned photographing method.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The options of the method may be determined by computer program instructions.

Consequently, according to an aspect herein, the subject disclosure is further directed to a computer program for executing the options of the method as described above when this program is executed by a computer.

This program can use any programming language and take the form of source code, object code or a code intermediate between source code and object code, such as a partially compiled form, or any other desirable form.

The above general description and elaboration below are but exemplary and explanatory, and do not limit the subject disclosure.

### BRIEF DESCRIPTION OF THE DRAWINGS

A drawing here is incorporated in the subject disclosure, constitutes part of the subject disclosure, illustrates at least one embodiment according to the subject disclosure, and together with the subject disclosure, serves to explain the principle of the subject disclosure.
FIG. 1 is a flowchart of a photographing method according to an exemplary embodiment.
FIG. 2(A) is a diagram of a reference picture according to an exemplary embodiment.
FIG. 2(B) is a diagram of a reference picture with the contour of the target marked according to an exemplary embodiment.
FIG. 3 is a block diagram of a photographing device according to an exemplary embodiment.
FIG. 4 is a block diagram of a photographing device according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc. may be adopted as long as they fall into the scope of the appended claims. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

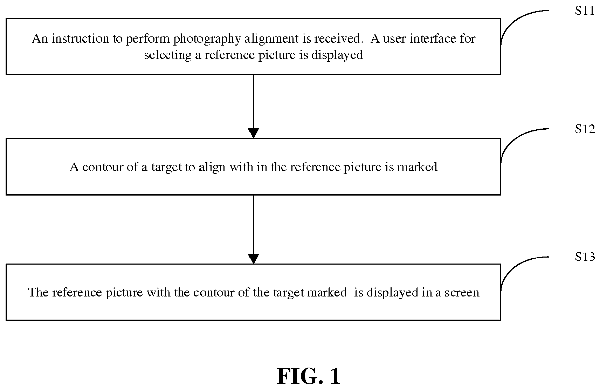

FIG. 1 is a flowchart of a photographing method according to an exemplary embodiment. As shown in FIG. 1, the photographing method includes the following steps.

In S11, an instruction to perform photography alignment is received. A user interface for selecting a reference picture is displayed. The reference picture includes a photo or an image of a video. This photographing function may be preset in photographing equipment. To perform photography alignment, the user may first select the photography alignment function. Having received the instruction, the equipment may activate an photography alignment mode and display a user interface for selecting the reference picture. The reference picture may be a photo or an image of a video.

In S12, a contour of a target to align with in the reference picture is marked. The target includes at least an object. In photography alignment, at least an object may be selected as the target to align with as needed. The contour of the target selected by the user may be marked. The contour of a target image may be marked according to a certain rule and algorithm. For example, the contour of a target image may be acquired by edge searching and stylization in image processing or by adjusting a threshold. In general, the contour of a target image may be acquired using any feasible method, which is not limited herein.

In S13, the reference picture with the contour of the target marked is displayed in a screen. In this way, in photographing, a photographer may refer to a reference picture with the contour of the target marked to align a photographed subject accurately in terms of its location and stance, and perform adjustment timely, thereby acquiring an image as expected. Of course, before referring to a reference picture with the contour of the target marked, necessary processing may have to be performed on the reference picture with the contour of the target marked, to allow a photographer to observe the location and stance of a photographed subject through the reference picture, so as to perform adjustment anytime.

In S11, the reference picture may include a picture taken in advance.

The reference picture may include a picture received from other equipment.

The reference picture may include a picture downloaded by a browser or an application (APP).

A photographer selects any picture as a reference picture according to personal preference.

In S12, the contour of the target to align with in the reference picture is marked as follows.

The contour of the target to align with is displayed using a line. A part of the reference picture other than the line of the contour is displayed with transparency ranging from 0% to 100%. For clearer and more distinct contour marking, the contour of a target may be outlined using a line. Meanwhile, to avoid blocking view of content to be photographed, the part of the reference picture with the contour of the target marked other than the line of the contour may be adjusted to be completely transparent or semitransparent. Adjusting the part of the reference picture other than the line of the contour to be completely transparent may render a hollow effect where only the line of the contour in the reference picture is displayed in a viewfinder screen, which suits photographing of a simple scene. Adjusting the part of the reference picture other than the line of the contour to be semitransparent, such as with transparency of 50%, may leave, in the viewfinder screen, a faint shadow of scenery of the reference picture, and a photographed subject may be observed through the reference picture, which suits photographing of a complicated scene. In this way, the photographer may observe the photographed subject through the transparent or semitransparent part of the reference picture and guide adjustment of the location and the stance of the photographed subject.

The contour of the target to align with may include at least one of an external contour or an internal contour. At least one of an external contour or an internal contour may be selected and used according to a degree of complicacy of a target to be photographed. For example, in taking a group photo, as persons or individuals in the group photo stays closely to each other, an external contour can outline only an overall external contour of multiple individuals, in which case it is inconvenient to locate each individual. If an internal contour, such as that of a face, is used in addition to the external contour, each individual may be located according to a face contour based on the external contour.

The target includes a primary target and a secondary target. The contour of the target to align with may be displayed using a line as follows. A contour of the primary target to align with is displayed using at least one of a first color or a line of a first type. A contour of the secondary target to align with is displayed using at least one of a second color or a line of a second type. For example, in a complicated scene, a number of arms may appear beside an individual. In this case, if only the contours of the individual and the arms are marked, in photography alignment the photographer may not be able to tell which contours belong to the arms of the individual to be photographed, rendering the photographer confused. Therefore, in marking a contour of a person in the reference picture, the contour of a primary person may be marked using a solid red line, and the contour of a secondary person may be marked using a dotted yellow line. Then, the persons may be distinguished and recognized easily by the photographer.

After the reference picture with the contour of the target marked has been displayed in the screen, an image captured by a front-facing camera may be received.

The photographing method may be implemented by a mobile phone.

Elaboration will be made below via embodiments.

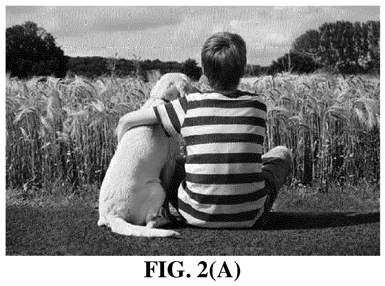

In an embodiment herein, Mr. Li is a photography enthusiast. His son likes their pet dog. Once on a family tour, Mr. Li saw his son sitting together with the pet dog by a golden wheat field, overlooking the distant woods. The entire picture was full of harmony, happiness, and vision for the future. Mr. Li was touched and felt lucky to have captured this happy moment, as shown in FIG. 2(A). Mr. Li felt a need to frequent and refresh the touching feeling with the family to remind himself and his family to cherish the present blessing. He suggested that the family should go to the place to have an identical photo taken same time every year.

Accordingly, Mr. Li and his family visited the place in each of the following years and had a photo taken which has a scene identical to that taken years ago. However, every time he looked at the photos taken over the years, Mr. Li that either there was something missing in scenery of the photos, or the respective angles at which they had been taken differed , which was rather a fly in the ointment.

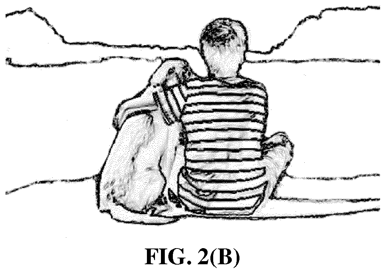

Now after purchasing a new cell phone, he finds that the camera of the cell phone is provided with an photography alignment function. Therefore, he uploads the most satisfactory photo to the cell phone and visits the place in the photo again with his family. Mr. Li starts the camera APP and clicks on a button for the photography alignment function. The APP displays a user interface for selecting a reference photo. Mr. Li selects the most satisfactory photo, and clicks on the image of his son, the image of the pet dog, and the image of the distant woods one by one as targets to align with. Soon, contour lines of the target images appear in the viewfinder, as shown in FIG. 2(B). Mr. Li aligns the distant woods with the line of the contour of the woods in the viewfinder, has his son and the pet dog sit in front of the camera, and adjusts the locations. He soon takes a photo identical to that taken years ago, which makes him excited.

In an embodiment herein, Zhang, a director, is filming an action movie. As a group of shots are about to be completed, there is an accident on the film site, where an actor is injured while completing an action. This brings the filming to a stop. An examination shows that the actor has to rest for a week.

One week later, the filming is to be resumed. An assistant asks Zhang the director whether the group of shots have to be re-filmed. Zhang says that re-filming is not needed because latest equipment is used for the filming, which may recover the interrupted scene. Therefore, the photographer retrieves the video at the interruption. Zhang selects a proper image from the video, selects a primary actor in the image as a primary target, and selects an extra as a secondary target. The video recorder or camera soon outlines contours of the actors. The contour of the primary actor is outlined using a solid red line. The contour of the extra is outlined using a dotted green line. A part other than the lines of the contours is made semitransparent. Zhang sits in front of the camera, guides persons on the site to their places according to the lines of the contours of the actors, sets up the scene according to the shadow in the semitransparent part of the reference picture, and complete the last shots in the group of shots in a fast and smooth way. The crew feels that use of the new camera in the filming avoids a lot of repetitive work, saves days of time, and minimizes the loss brought about by the accident.

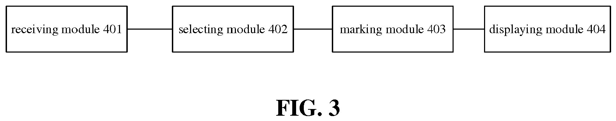

FIG. 3 is a block diagram of a photographing device according to an exemplary embodiment. Referring to FIG. 3, the device includes a receiving module 401, a selecting module 402, a marking module 403, and a displaying module 404.

The receiving module 401 is adapted to receiving an instruction to perform photography alignment.

The selecting module 402 is adapted to displaying a user interface for selecting a reference picture.

The marking module 403 is adapted to marking a contour of a target to align with in the reference picture.

The displaying module 404 is adapted to displaying the reference picture with the contour of the target marked in a screen.

The reference picture may include a picture taken in advance. The reference picture may include a picture received from other equipment. The reference picture may include a picture downloaded by a browser or an application (APP).

The marking module 403 may mark the contour of the target to align with in the reference picture as follows. The marking module may display the contour of the target to align with using a line. The marking module may display a part of the reference picture other than the line of the contour with transparency ranging from 0% to 100%.

The contour of the target to align with may include at least one of an external contour or an internal contour.

The target may include a primary target and a secondary target. The contour of the target to align with may be displayed using the line as follows.

A contour of the primary target to align with may be displayed using at least one of a first color or a line of a first type.

A contour of the secondary target to align with may be displayed using at least one of a second color or a line of a second type.

The photographing device may further include a receiving module. The receiving module may be adapted to receiving an image captured by a front-facing camera after the reference picture with the contour of the target marked has been displayed in the screen.

The photographing device may be implemented as a mobile phone.

A photographing device includes a processor and memory.

The memory may store an instruction executable by the processor.

The processor is adapted to performing at least one option as follows.

An instruction to perform photography alignment is received.

A user interface for selecting a reference picture is displayed. The reference picture includes a photo or an image of a video.

A contour of a target to align with in the reference picture is marked. The target includes at least an object.

The reference picture with the contour of the target marked is displayed in a screen.

A module of an aforementioned device may perform an operation in a way as elaborated in an embodiment regarding the method. The elaboration is not repeated here.

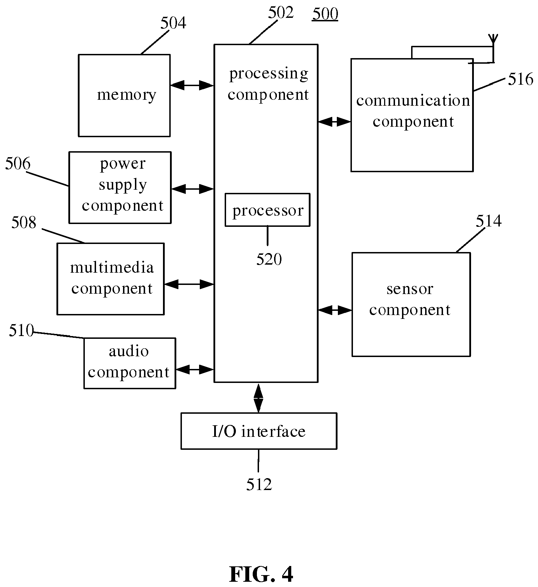

FIG. 4 is a block diagram of a photographing device 500 according to an exemplary embodiment. For example, the device 500 may be a mobile phone, a computer, digital broadcasting UE, a message transceiver, a game console, tablet equipment, medical equipment, fitness equipment, a personal digital assistant, etc.

Referring to FIG. 4, the device 500 may include at least one of a processing component 502, memory 504, a power supply component 506, a multimedia component 508, an audio component 510, an Input / Output (I/O) interface 512, a sensor component 514, or a communication component 516.

The processing component 502 may generally control an overall operation of the device 500, such as operations associated with display, a telephone call, data communication, a camera operation, a recording operation, etc. The processing component 502 may include one or more processors 520 to execute instructions so as to complete all or part of the options of an aforementioned method. In addition, the processing component 502 may include one or more modules to facilitate interaction between the processing component 502 and other components. For example, the processing component 502 may include a multimedia module to facilitate interaction between the multimedia component 508 and the processing component 502.

The memory 504 may be adapted to storing various types of data to support the operation at the equipment 500. Examples of such data may include instructions of any application or method adapted to operating on the device 500, contact data, phonebook data, messages, pictures, videos, etc. The memory 504 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 506 may supply electric power to various components of the device 500. The power supply component 506 may include a power management system, one or more power sources, and other components related to generating, managing, and distributing electricity for the device 500.

The multimedia component 508 may include a screen that provides an output interface between the device 500 and a user. The screen may include a Liquid Crystal Display (LCD) and a Touch Panel (TP). If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 508 may include at least one of a front camera or a rear camera. When the device 500 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 510 may be adapted to outputting and / or inputting an audio signal. For example, the audio component 510 may include a microphone (MIC). When the device 500 is in an operation mode such as a call mode, a recording mode, a voice recognition mode, etc., the MIC may be adapted to receiving an external audio signal. The received audio signal may be further stored in the memory 504 or may be sent via the communication component 516. The audio component 510 may further include a loudspeaker adapted to outputting the audio signal.

The I/O interface 512 may provide an interface between the processing component 502 and a peripheral interface module. Such a peripheral interface module may be a keypad, a click wheel, a button, etc. Such a button may include but is not limited to at least one of a homepage button, a volume button, a start button, or a lock button.

The sensor component 514 may include one or more sensors for assessing various states of the device 500. For example, the sensor component 514 may detect an on/off state of the device 500 and relative positioning of components such as the display and the keypad of the device 500. The sensor component 514 may further detect a change in the position of the device 500 or of a component of the device 500, whether there is contact between the device 500 and a user, the orientation or acceleration / deceleration of the device 500, a change in the temperature of the device 500, etc. The sensor component 514 may include a proximity sensor adapted to detecting existence of a nearby object without physical contact. The sensor component 514 may further include an optical sensor such as a Complementary Metal-Oxide-Semiconductor (CMOS) or a Charge-Coupled-Device (CCD) image sensor used in an imaging application. The sensor component 514 may further include an acceleration sensor, a gyroscope sensor, a magnetic sensor, a pressure sensor, a temperature sensor, etc.

The communication component 516 may be adapted to facilitating wired or wireless communication between the device 500 and other equipment. The device 500 may access a wireless network based on a communication standard such as Wi-Fi, 2G, 3G..., or a combination thereof. The communication component 516 may broadcast related information or receive a broadcast signal from an external broadcast management system via a broadcast channel. The communication component 516 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

The device 500 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement an aforementioned method.

A transitory or non-transitory computer-readable storage medium including instructions, such as memory 504 including instructions, may be provided. The instructions may be executed by the processor 520 of the device 500 to implement an aforementioned method. For example, the transitory or non-transitory computer-readable storage medium may be Read-Only Memory (ROM), Random Access Memory (RAM), Compact Disc Read-Only Memory (CD-ROM), a magnetic tape, a floppy disk, optical data storage equipment, etc.

A transitory or non-transitory computer-readable storage medium includes instructions which when executed by a processor of mobile UE, may cause the mobile UE to implement a photographing method. The method includes at least one option as follows.

An instruction to perform photography alignment is received.

A user interface for selecting a reference picture is displayed. The reference picture includes a photo or an image of a video.

A contour of a target to align with in the reference picture is marked. The target includes at least an object.

The reference picture with the contour of the target marked is displayed in a screen.

The processor may be a Central Processing Unit (CPU), a general purpose processor, a Digital Signal Processor (DSP), an Application Specific Integrated Circuit (ASIC), and/or the like. A general purpose processor may be a microprocessor, any conventional processor, and/or the like. Aforementioned memory may be a Read-Only Memory (ROM), a Random Access Memory (RAM), a flash memory, a hard disk, a solid state disk, and/or the like. A Subscriber Identity Module (SIM) card, also referred to as a smart card, may have to be installed on a digital mobile phone before the phone can be used. Content, such as information on a user of the digital mobile phone, an encryption key, a phonebook of the user, may be stored on the computer chip. An option of the method according to any combination of embodiments herein may be executed by a hardware processor, or by a combination of hardware and software modules in the processor.

Herein by "multiple", it may mean two or more. A term "and /or" may describe an association between associated objects, including three possible relationships. For example, by A and /or B, it may mean that there may be three cases, namely, existence of but A, existence of both A and B, or existence of but B. A slash mark "/" may generally denote an "or" relationship between two associated objects that come respectively before and after the mark per se.

Other embodiments according to the subject disclosure will be apparent to one skilled in the art after he/she has considered the subject disclosure and practiced the invention disclosed herein and defined by the appended claims. The subject application is intended to cover any variation, use, or adaptation of the subject disclosure following the general principle of the subject disclosure and including such departures from the subject disclosure as come within knowledge or customary practice in the art staying inside the scope of the appended claims. The subject disclosure and its embodiments are intended to be exemplary only, with a true scope of the subject disclosure being indicated by the appended claims.

## Claims

1. A photographing method, comprising:
receiving (S11) an instruction to perform photography alignment;
displaying (S11) a user interface for selecting a reference picture, the reference picture comprising a photo or an image of a video;
receiving a target to align with in the reference picture selected by a user, the target comprising a primary target and a secondary target, each target comprising an object;
marking (S12) a contour of the target to align with in the reference picture by displaying a contour of the primary target to align with using at least one of a first color or a line of a first type, and displaying a contour of the secondary target to align with using at least one of a second color or a line of a second type; and
displaying (S13) the reference picture with the contour of the primary target and the secondary target marked in a screen, wherein a part of the reference picture other than the line of the contour is displayed with transparency ranging from 0% to 100%.

2. The photographing method of claim 1, wherein the reference picture further comprises:
a picture taken in advance; or
a picture received from other equipment; or
a picture downloaded by a browser or an application, APP.

3. The photographing method of any one of the previous claims, wherein the contour of the target to align with comprises at least one of an external contour or an internal contour.

4. The photographing method of any one of the previous claims, further comprising: after the displaying (S13) the reference picture with the contour of the target marked in a screen,
receiving an image captured by a front-facing camera.

5. The photographing method of any one of the previous claims, wherein the photographing method is implemented by a mobile phone.

6. A photographing device, comprising a receiving module (401), a selecting module (402), a marking module (403), and a displaying module (404),
wherein the receiving module (401) is adapted to receiving an instruction to perform photography alignment,
wherein the selecting module (402) is adapted to displaying a user interface for selecting a reference picture, the reference picture comprising a photo or an image of a video,
wherein the receiving module (401) is adapted to receiving a target to align with in the reference picture selected by a user, the target comprising a primary target and a secondary target, each target comprising an object,
wherein the marking module (403) is adapted to marking a contour of the target to align with in the reference picture by displaying a contour of the primary target to align with using at least one of a first color or a line of a first type, and displaying a contour of the secondary target to align with using at least one of a second color or a line of a second type,
wherein the displaying module (404) is adapted to displaying the reference picture with the contour of the primary target and the secondary target marked in a screen, wherein a part of the reference picture other than the line of the contour is displayed with transparency ranging from 0% to 100%.

7. The photographing device of claim 6, wherein the reference picture further comprises:
a picture taken in advance; or
a picture received from other equipment; or
a picture downloaded by a browser or an application, APP.

8. The photographing device of any one of claims 6 to 7, wherein the contour of the target to align with comprises at least one of an external contour or an internal contour.

9. The photographing device of any one of claims 6 to 8, further comprising a receiving module adapted to receiving an image captured by a front-facing camera.

10. A computer-readable storage medium having stored thereon instructions that, when executed by a processor of mobile User Equipment, UE, cause the mobile UE to implement the photographing method of any one of claims 1 to 5.

11. A computer program comprising instructions for executing the photographing method of any one of claims 1 to 5 when said program is executed by a computer.

## Patentansprüche

1. Ein Fotografierverfahren, umfassend:
Empfangen (S11) einer Anweisung, Fotografie-Ausrichtung durchzuführen;
Anzeigen (S11) einer Benutzeroberfläche zum Auswählen eines Referenzbildes, wobei das Referenzbild ein Foto oder ein Bild eines Videos umfasst;
Empfangen eines Ziels, an dem ausgerichtet werden soll, in dem von einem Benutzer ausgewählten Referenzbild, wobei das Ziel ein primäres Ziel und ein sekundäres Ziel umfasst, wobei jedes Ziel ein Objekt umfasst;
Markieren (S12) einer Kontur des Ziels, an der ausgerichtet werden soll, im Referenzbild durch Anzeigen einer Kontur des primären Ziels, an der ausgerichtet werden soll, unter Verwendung von mindestens einem aus einer ersten Farbe oder einer Linie eines ersten Typs, und Anzeigen einer Kontur des sekundären Ziels, an der ausgerichtet werden soll, unter Verwendung von mindestens einem aus einer zweiten Farbe oder einer Linie eines zweiten Typs; und
Anzeigen (S13) des Referenzbildes mit der markierten Kontur des primären Ziels und des sekundären Ziels auf einem Bildschirm, wobei ein Teil des Referenzbildes, der nicht die Linie der Kontur ist, mit einer Transparenz im Bereich von 0 % bis 100 % angezeigt wird.

2. Das Fotografierverfahren nach Anspruch 1, wobei das Referenzbild weiter umfasst:
ein Bild, das im Vorfeld aufgenommen wurde; oder
ein Bild, das von einem anderen Gerät empfangen wurde; oder
ein Bild, das von einem Browser oder einer Anwendung, APP, heruntergeladen wurde.

3. Das Fotografierverfahren nach einem der vorstehenden Ansprüche, wobei die Kontur des Ziels, an der ausgerichtet werden soll, mindestens eines aus einer äußeren Kontur oder einer inneren Kontur umfasst.

4. Das Fotografierverfahren nach einem der vorstehenden Ansprüche, weiter umfassend: nach dem Anzeigen (S13) des Referenzbildes mit der markierten Kontur des Ziels auf einem Bildschirm,
Empfangen eines von einer Frontkamera erfassten Bildes.

5. Das Fotografierverfahren nach einem der vorstehenden Ansprüche, wobei das Fotografierverfahren von einem Mobiltelefon implementiert wird.

6. Eine Fotografiervorrichtung, die ein Empfangsmodul (401), ein Auswahlmodul (402), ein Markiermodul (403) und ein Anzeigemodul (404) umfasst,
wobei das Empfangsmodul (401) geeignet ist, eine Anweisung, Fotografie-Ausrichtung durchzuführen, zu empfangen,
wobei das Auswahlmodul (402) geeignet ist, eine Benutzeroberfläche zum Auswählen eines Referenzbildes anzuzeigen, wobei das Referenzbild ein Foto oder ein Bild eines Videos umfasst,
wobei das Empfangsmodul (401) geeignet ist, ein Ziel, an dem ausgerichtet werden soll, in dem von einem Benutzer ausgewählten Referenzbild zu empfangen, wobei das Ziel ein primäres Ziel und ein sekundäres Ziel umfasst, wobei jedes Ziel ein Objekt umfasst,
wobei das Markiermodul (403) geeignet ist, eine Kontur des Ziels, an der ausgerichtet werden soll, im Referenzbild zu markieren durch Anzeigen einer Kontur des primären Ziels, an der ausgerichtet werden soll, unter Verwendung von mindestens einem aus einer ersten Farbe oder einer Linie eines ersten Typs, und Anzeigen einer Kontur des sekundären Ziels, an der ausgerichtet werden soll, unter Verwendung von mindestens einem aus einer zweiten Farbe oder einer Linie eines zweiten Typs,
wobei das Anzeigemodul (404) geeignet ist, das Referenzbild mit der markierten Kontur des primären Ziels und des sekundären Ziels auf einem Bildschirm anzuzeigen, wobei ein Teil des Referenzbildes, der nicht die Linie der Kontur ist, mit einer Transparenz im Bereich von 0 % bis 100 % angezeigt wird.

7. Die Fotografiervorrichtung nach Anspruch 6, wobei das Referenzbild weiter umfasst:
ein Bild, das im Vorfeld aufgenommen wurde; oder
ein Bild, das von einem anderen Gerät empfangen wurde; oder
ein Bild, das von einem Browser oder einer Anwendung, APP, heruntergeladen wurde.

8. Die Fotografiervorrichtung nach einem der Ansprüche 6 bis 7, wobei die Kontur des Ziels, an der ausgerichtet werden soll, mindestens eines aus einer äußeren Kontur oder einer inneren Kontur umfasst.

9. Die Fotografiervorrichtung nach einem der Ansprüche 6 bis 8, weiter ein Empfangsmodul umfassend, das geeignet ist, ein von einer Frontkamera erfasstes Bild zu empfangen.

10. Ein Computerlesbares Speichermedium, auf dem Anweisungen gespeichert sind, die, wenn sie von einem Prozessor einer mobilen Benutzerausrüstung, UE, ausgeführt werden, bewirken, dass die mobile UE das Fotografierverfahren nach einem der Ansprüche 1 bis 5 implementiert.

11. Ein Computerprogramm, das Anweisungen umfasst zum Ausführen des Fotografierverfahrens nach einem der Ansprüche 1 bis 5, wenn das Programm von einem Computer ausgeführt wird.

## Revendications

1. un procédé photographique, comprenant :
la réception (S11) d'une instruction pour réaliser un alignement de photographies ;
l'affichage (S11) d'une interface utilisateur pour sélectionner une image de référence, l'image de référence comprenant une photo ou une image d'une vidéo ;
la réception d'une cible d'alignement dans l'image de référence sélectionnée par un utilisateur, la cible comprenant une cible primaire et une cible secondaire, chaque cible comprenant un objet ;
le marquage (S12) d'un contour de la cible d'alignement dans l'image de référence par l'affichage d'un contour de la cible primaire d'alignement en utilisant au moins l'une parmi une première couleur ou une ligne d'un premier type, et l'affichage d'un contour de la cible secondaire d'alignement en utilisant au moins l'une parmi une seconde couleur ou une ligne d'un second type ; et
l'affichage (S13) de l'image de référence avec le contour de la cible primaire et la cible secondaire marqué dans un écran, dans lequel une partie de l'image de référence autre que la ligne du contour est affichée avec une transparence dans une plage de 0 % à 100 %.

2. le procédé photographique selon la revendication 1, dans lequel l'image de référence comprend en outre :
une image prise à l'avance ; ou
une image reçue depuis un autre équipement ; ou
une image téléchargée par un navigateur ou une application, APP.

3. Le procédé photographique selon l'une quelconque des revendications précédentes, dans lequel le contour de la cible d'alignement comprend au moins l'un parmi un contour externe ou un contour interne.

4. Le procédé photographique selon l'une quelconque des revendications précédentes, comprenant en outre : après l'affichage (S13) de l'image de référence avec le contour de la cible marqué dans un écran,
la réception d'une image capturée par une caméra frontale.

5. Le procédé photographique selon l'une quelconque des revendications précédentes, dans lequel le procédé photographique est mis en oeuvre par un téléphone portable.

6. Un dispositif photographique, comprenant un module de réception (401), un module de sélection (402), un module de marquage (403), et un module d'affichage (404),
dans lequel le module de réception (401) est apte à recevoir une instruction pour réaliser un alignement de photographies,
dans lequel le module de sélection (402) est apte à afficher une interface utilisateur pour sélectionner une image de référence, l'image de référence comprenant une photo ou une image d'une vidéo,
dans lequel le module de réception (401) est adapté à recevoir une cible d'alignement dans l'image de référence sélectionnée par un utilisateur, la cible comprenant une cible primaire et une cible secondaire, chaque cible comprenant un objet,
dans lequel le module de marquage (403) est adapté pour marquer un contour de la cible d'alignement dans l'image de référence par l'affichage d'un contour de la cible primaire d'alignement en utilisant au moins l'une parmi une première couleur ou une ligne d'un premier type, et l'affichage d'un contour de la cible secondaire d'alignement en utilisant au moins l'une parmi une seconde couleur ou une ligne d'un second type,
dans lequel le dispositif d'affichage (404) est adapté pour afficher l'image de référence avec le contour de la cible primaire et la cible secondaire marqué dans un écran, dans lequel une partie de l'image de référence autre que la ligne du contour est affichée avec une transparence dans une plage de 0 % à 100 %.

7. le dispositif photographique selon la revendication 6, dans lequel l'image de référence comprend en outre :
une image prise à l'avance ; ou
une image reçue depuis un autre équipement ; ou
une image téléchargée par un navigateur ou une application, APP.

8. Le dispositif photographique selon l'une quelconque des revendications 6 et 7, dans lequel le contour de la cible d'alignement comprend au moins l'un parmi un contour externe ou un contour interne.

9. Le dispositif photographique selon l'une quelconque des revendications 6 à 8, comprenant en outre un module de réception adapté pour recevoir une image capturée par une caméra frontale.

10. Un support de stockage lisible sur ordinateur présentant des instructions stockées sur celui-ci qui, lorsqu'elles sont exécutées par un processeur d'un équipement utilisateur, UE, mobile amènent l'UE mobile à mettre en oeuvre le procédé photographique selon l'une quelconque des revendications 1 à 5.

11. Un programme informatique incluant des instructions pour exécuter le procédé photographique selon l'une quelconque des revendications 1 à 5, lorsque ledit programme est exécuté par un ordinateur.
